# FASCICULE DE BREVET EUROPEEN

(11) **EP 1 277 854 B1**
(45) Date de publication et mention de la délivrance du brevet: **26.09.2007**
(21) Numéro de dépôt: 02291742.1
(22) Date de dépôt: 11.07.2002
(51) Int. Cl.: C23C 28/00

(54) **Procédé de réparation locale de pièces revêtues d'une barrière thermique**
Verfahren zum lokalen Reparieren eines Gegenstandes beschichtet mit einer Wärmedämmstruktur
Process for the local repairing of pieces coated with a thermal barrier

(30) Priorité: 12.07.2001 FR 0109259
(43) Date de publication de la demande: 22.01.2003
(73) Titulaire: SNECMA, 75015 Paris (FR); SNECMA SERVICES, 75015 Paris (FR)
(72) Inventeur: Boucard, Bruno Gilles François, 86100 Les Retinieres (FR); Fournes, Jean-Paul, 91490 Dannemois (FR); Oberlaender, Guillaume Roger Pierre, 75014 Paris (FR); Jaslier, Yann Philippe, 77000 Melun (FR); Malie, André Hubert Louis, 86100 Chatellerault (FR); Jacquot, Frédéric Yves Pierre, 86100 Chatellerault (FR); Richin, Catherine Marie-Hélène, 91410 Roinville sous Dourdan (FR); Leger, Jacques Louis, 77380 Combs La Ville (FR)

(56) Documents cités:
- EP-A- 0 808 913
- EP-A- 1 013 786
- EP-A- 1 013 787
- EP-A- 1 013 796
- EP-A- 1 101 833
- US-A- 5 336 382
- US-A- 5 813 118
- US-A- 5 897 966
- US-A- 5 972 424
- PATENT ABSTRACTS OF JAPAN vol. 017, no. 336 (M-1435), 25 juin 1993 (1993-06-25) & JP 05 042425 A (ISHIKAWAJIMA HARIMA HEAVY IND CO LTD), 23 février 1993 (1993-02-23)

## Description

L'invention concerne la réparation locale de pièces revêtues d'une barrière thermique et soumises en fonctionnement à un environnement hostile, telles que les distributeurs et les aubes mobiles des turbines à haute pression de turbomachines, notamment d'aviation.

L'amélioration continue du rendement des turbines à gaz modernes impose l'utilisation de températures en entrée de turbine toujours plus élevées. Cette tendance a motivé le développement de matériaux toujours plus réfractaires pour constituer les pièces de la turbine HP telles que les aubes mobiles et les distributeurs. Pour cela des superalliages monocristallins avec des fractions volumiques de phase durcissante gamma prime très élevées ont été développés. Le développement des superalliages ne suffit plus pour accompagner les exigences croissantes en durée de vie des pièces aux hautes températures. C'est ainsi qu'on a vu, plus récemment, l'introduction en service de revêtements isolants thermiques pour abaisser la température de métal des pièces refroidies par convection interne.

Ces revêtements isolants thermiques sont constitués d'une couche externe de céramique à base de zircone stabilisée par de l'oxyde d'yttrium déposée sur une sous-couche en alliage aluminoformeur destinée à fournir l'adhérence au revêtement de céramique tout en protégeant le métal de la pièce de l'oxydation. Les sous-couches de barrière thermique sont typiquement de la classe des McrAIY (où M désigne le nickel ou le cobalt) ou des aluminiures (NiAI). Dans cette dernière classe, les revêtements d'aluminiures modifiés par un métal précieux tel que le platine (Ni₍₁₋ₓ₎PtₓAl) constituent des systèmes de sous-couche de choix.

Pour pouvoir résister aux contraintes thermiques de dilatation différentielle avec le métal de base, la couche externe de céramique doit posséder une microstructure ad hoc lui permettant d'accompagner les déformations de la pièce sans s'écailler. Cela a nécessité en particulier le développement de techniques de dépôt sophistiquées conférant aux revêtements des microstructures segmentées. La microsegmentation confère à des revêtements de type céramique, matériaux connus pour leur faible ductilité, l'aptitude à subir des microdéformations. Cet exploit a été obtenu notamment grâce à la mise au point de la projection plasma. Cette technique consiste à fondre le matériau de céramique sous forme de poudre dans un plasma de haute densité et de projeter les gouttelettes semi-fondues sur la surface de la pièce à revêtir. Ce procédé confère au dépôt un revêtement lamellaire avec un réseau de microfissures plus ou moins parallèles au plan du revêtement. Les barrières thermiques plasma ont trouvé une utilisation généralisée pour la protection des chambres de combustion.

Pour les pièces de la turbine haute pression, la technique de dépôt physique en phase vapeur est préférée à la technique de projection thermique. Cette technique confère au dépôt de céramique une microstructure constituée de colonnettes perpendiculaires à la surface de la pièce. Cette microstructure présente l'avantage de pouvoir s'accommoder encore mieux des dilatations différentielles. De ce fait, les revêtements déposés par le procédé d'évaporation sous bombardement électronique, encore appelé procédé EB-PVD (abréviation de l'expression anglaise Electron Beam-Physical Vapour Deposition), possèdent une tenue au choc thermique supérieure à celle des dépôts plasma. A contrario, les revêtements de céramique élaborés par projection plasma ont une microstructure lamellaire qui n'offre pas la même aptitude à la déformation et au choc thermique. On note une tenue à l'écaillage bien moindre des revêtements plasma déposés sur les faibles rayons de courbures. Par ailleurs, la projection thermique pose un sérieux problème de maîtrise de l'obstruction des perçages rendu difficile par nature. Enfin, les dépôts projetés souffrent d'un état de surface insuffisant pour les applications aéronautiques.

Dans la technique de dépôt par évaporation sous bombardement électronique, dite EB-PVD, les pièces sont revêtues par la condensation de vapeur de céramique dans une enceinte sous vide avec une pression partielle de gaz neutre ou réactif. La vapeur de céramique est générée par évaporation sous faisceau d'électrons de lingots de céramique frittés. Le faisceau d'électrons chauffe la surface des barreaux en céramique, et seule la surface des pièces située en vis-à-vis de la surface des barreaux est recouverte d'une couche de céramique. Pour pouvoir recouvrir un profil d'aube neuve de turbine, il est donc nécessaire de mettre la pièce en rotation dans la vapeur à la manière d'une rôtissoire.

La rotation de la pièce a pour effet de réduire la vitesse de dépôt par un facteur 3,14 par rapport à une surface fixe parallèle à la surface des barreaux. De plus, la mise en rotation des pièces durant l'opération de dépôt EB-PVD nécessite d'espacer les pièces les unes par rapport aux autres et de diminuer la charge utile de la fournée de pièces à traiter. En effet, seul l'espace du four situé au dessus des barreaux est utilisable pour effectuer correctement le dépôt, ce qui réduit encore le nombre de pièces susceptibles d'être traitées dans une fournée. La mise en rotation des pièces induit donc un accroissement du coût du dépôt de céramique. La vitesse de dépôt relativement lente, le faible rendement de dépôt approchant 5 % et le coût d'acquisition d'une telle machine rendent le dépôt de céramique par le procédé EB-PVD particulièrement onéreux. Le coût d'un système de barrière thermique peut varier de 15 à 25 % du coût de la pièce.

En fonctionnement, le revêtement de barrière thermique est sollicité de manière très inégale sur la pièce. Les sollicitations les plus sévères sont rencontrées dans la région du bord d'attaque de l'aube qui est le siège d'un flux thermique élevé, d'impacts de particules et de débris ingérés par le moteur ou émis dans les sections en amont de la turbine.

De plus, le rayon local au bord d'attaque produit des contraintes d'arrachement dans la couche de céramique favorisant son décollement. Le potentiel de durée de vie sur une aube de turbine revêtue d'une barrière thermique est le plus faible au bord d'attaque de l'aube.

Corrélativement à cette combinaison de contraintes, on observe que l'endommagement de la barrière thermique se produit dans la majorité des cas dans la région du bord d'attaque. Cet endommagement se manifeste typiquement par un écaillage de la barrière thermique dans la région du bord d'attaque de l'aube, et par l'oxydation importante de la sous-couche dans les zones où la céramique s'est écaillée.

On constate dans la pratique que la présence d'endommagements très locaux sur la pièce conduit à reconditionner le revêtement de barrière thermique dans sa totalité. Le revêtement de céramique est totalement décapé, puis on enlève la sous-couche de la barrière thermique. Les opérations de décapage sont délicates car elles peuvent conduire à une diminution des épaisseurs de toile de la pièce ainsi qu'à l'élargissement des évents et corrélativement à une diminution de leur potentiel de durée de vie. La pièce est ensuite rehaussée par rechargement du sommet d'aube. Le revêtement est ensuite reconditionné par un dépôt d'une sous-couche et d'une couche en céramique, ce qui rend difficilement maîtrisable la maîtrise de l'obstruction des évents.

En d'autres termes, des zones saines de la pièce subissent inutilement des opérations risquées d'enlèvement et de reconditionnement. Cette pratique a donc pour inconvénient majeur d'affecter le potentiel de la pièce dans des zones qui présentent des épaisseurs de toile faibles.

Le brevet US 5,723,078 dévoile une technique de réparation qui consiste à nettoyer localement la sous-couche dans la zone où la couche de céramique est écaillée et à déposer de la céramique par une technique de préférence autre que l'EB-PVD. Il est clair que cette invention n'est applicable qu'au cas de figure où la céramique s'est écaillée dans une zone de la pièce non critique du point de vue de la sévérité de la sollicitation et qu'il est acceptable d'avoir recours à des techniques de dépôt telles que la projection plasma. La technique décrite dans ce brevet ne s'applique donc pas au cas général qui concerne les régions les plus critiques des aubes, notamment le bord d'attaque des aubes.

EP 0 969 116 enseigne que l'on peut réaliser de façon contrôlée une sous-couche sur une aube neuve, cette sous-couche étant ensuite recouverte d'une couche externe de céramique de telle manière que la sous-couche puisse limiter l'oxydation en cas d'écaillage de la céramique dans les zones critiques telles que le bord d'attaque et le bord de fuite. Ce document ne dit rien sur la réparation des zones écaillées et sur la reconstitution de la couche externe de céramique dans ces zones.

EP 1 013 787 concerne la réparation locale de revêtements de protection métalliques de pièces, telles que des aubes de turbine. Mais ces pièces ne comportent pas de couches externes de céramique.

EP 1013 796 décrit un procédé dans lequel toute la couche de céramique est retirée. Seule la sous-couche est retirée localement.

EP 5 254 413 concerne un procédé pour réaliser une couche de protection métallique dans des zones non protégées d'une pièce déjà recouverte d'une couche externe de céramique, par un procédé de cémentation en caisse sans présence d'éléments halogénés. Ce document ne prévoit pas de recouvrir ultérieurement ces zones avec une couche de céramique, et la sous-couche est réduite à une simple combinaison d'aluminium Al et d'alumine Al₂O₃ dont les caractéristiques sont très limitées.

L'invention a pour objet de proposer un procédé de réparation locale de pièces revêtues d'une barrière thermique qui permette de reconditionner notamment la sous-couche dans les zones à réparer.

L'invention a également pour objet de proposer un procédé pour reconstituer une couche externe de céramique colonnaire uniquement dans les zones à réparer après reconditionnement de la sous-couche dans ces zones.

L'invention concerne donc un procédé de réparation locale de pièces revêtues d'une barrière thermique constituée d'une couche externe de céramique et d'une sous-couche métallique en alliage aluminoformeur assurant la protection du substrat contre l'oxydation et l'accrochage de la couche externe en céramique.

Selon l'invention
a) on délimite la zone à réparer avec un masque mécanique adapté à la forme de la pièce et à la zone à réparer,
b) on décape la zone à réparer, afin d'enlever dans cette zone la céramique, la couche d'alumine et une partie de l'épaisseur de la sous-couche,
c) on rapporte des matériaux de réparation de la sous-couche dans ladite zone en soumettant la pièce partiellement décapée à un dépôt de métaux par courant électrique,
d) on soumet la pièce à un traitement thermique afin de permettre la diffusion des métaux apportés dans la sous-couche restante de la zone à réparer et la formation d'une pellicule superficielle d'alumine.

Le décapage de la zone à réparer est réalisé de préférence mécaniquement par sablage, ponçage, meulage ou par décapage laser.

Les propriétés isolantes de la couche de céramique, qui subsiste en dehors de la zone décapée, permettent de déposer les métaux apportés par courant électrique uniquement sur la zone décapée qui est, par le fait même, conductrice.

De préférence, on rapporte des matériaux de réparation de la sous-couche dans la zone à réparer par électrophorèse. On consolide le dépôt électrophorétique par dépôt électrolytique de nickel, palladium ou platine. On peut également utiliser le procédé connu dit de « co-déposition » qui combine en une seule opération le dépôt électrophorétique et le dépôt par électrolyse.

Pour aluminiser la sous-couche, on applique sur les métaux apportés une couche de peinture aluminisante. Cette application de peinture aluminisante sur la sous-couche encore poreuse permet à la fois de réaluminiser la sous-couche et de la consolider temporairement avant le traitement thermique.

Cette aluminisation n'est pas toujours nécessaire. Un apport extérieur d'aluminium est nécessaire dans le cas des sous-couches de NiAl, car elles ont une forte proportion de Al. Dans le cas des MCr Al Y, qui ont au contraire une proportion beaucoup plus faible de Al, il peut arriver que l'aluminium qui remonte du substrat par diffusion soit suffisant.

Pour diffuser les métaux apportés, on soumet la pièce à un traitement thermique à une température supérieure à 700°C pendant au moins deux heures. La température est de préférence voisine de 1000°C et la durée du traitement thermique est de trois heures environ.

Après l'opération de diffusion des métaux par traitement thermique, la pièce peut être réutilisée sans ajout de céramique dans la zone réparée. Mais elle est également prête pour le dépôt d'une nouvelle couche externe de céramique sur les zones rechargées en métaux.

Selon l'invention, on délimite la zone à reconstituer avec un masque mécanique et on dépose une nouvelle couche externe de céramique par un procédé d'évaporation de céramique par bombardement électronique afin d'obtenir une structure colonnaire.

De manière avantageuse, on expose uniquement la surface de la zone à reconstituer à la source de vapeurs de céramique.

Avantageusement, on fait pivoter la pièce suivant un mouvement oscillant d'amplitude donnée au cours de l'exposition afin de déposer une couche de céramique sensiblement homogène sur la zone à reconstituer.

D'autres avantages et caractéristiques de l'invention ressortiront à la lecture de la description suivante faite à titre d'exemple et en référence aux dessins annexés dans lesquels :
la figure 1 montre une portion d'une pièce saine revêtue d'une barrière thermique ;
la figure 2 montre en coupe l'aspect de la microstructure d'une zone écaillée à réparer ;
les figures 3a et 3b montrent respectivement des aubes de turbine dont le bord d'attaque et l'extrados sont à réparer ;
la figure 4 montre en coupe l'aspect de la zone à réparer après l'opération de décapage ;
la figure 5 montre la même zone après dépôt de métaux par électrophorèse ;
la figure 6 montre la zone à réparer après l'opération de dépôt de métaux précieux par électrolyse ;
la figure 7 montre la même zone chargée de métaux après application d'une peinture aluminisante ;
la figure 8 montre l'aspect de la sous-couche après le traitement thermique de diffusion ;
la figure 9 montre une aube dont la sous-couche a été restaurée, cette aube étant équipée d'un masque pour la reconstitution de la couche externe de céramique sur la zone à réparer ;
la figure 10 montre un appareil pour déposer la couche externe de céramique par bombardement électronique ;
la figure 11 montre le trajet d'une particule de céramique émise entre la source et une portion de surface à recouvrir ;
la figure 12 montre un dispositif de support de pièces dans l'appareil de dépôt de céramique ;
la figure 13 montre le mouvement oscillant de la pièce exposée ;
les figures 14a et 14b montrent un exemple du mouvement du support de pièces pendant le dépôt de céramique ;
les figures 15a et 15b montrent une variante du mouvement du support de pièces ;
la figure 16 montre en coupe la zone à réparer après le dépôt de céramique ; et
la figure 17 montre en coupe la zone à réparer après polissage.

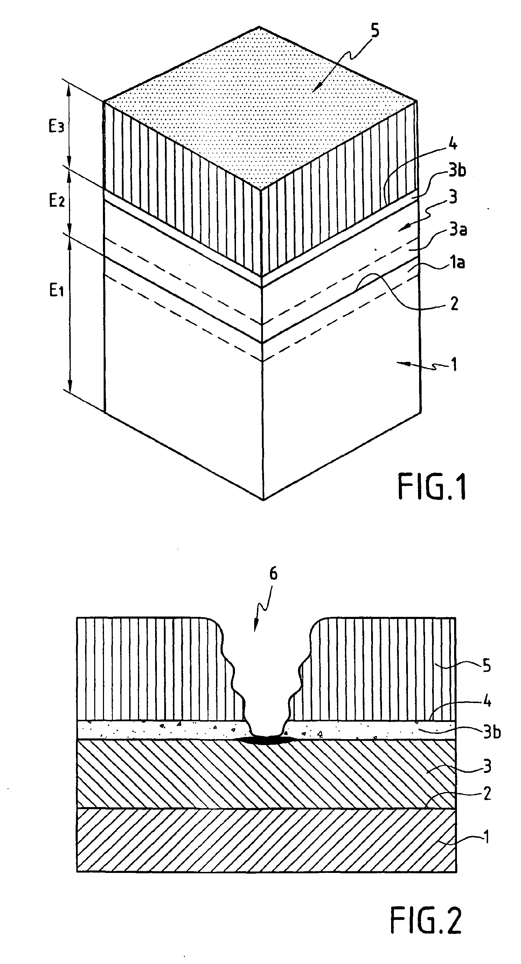

La figure 1 montre une portion d'une pièce saine 1 d'un superailliage à base de nickel d'épaisseur E1, revêtue sur sa face extérieure 2 d'une sous-couche métallique 3 en alliage métallique aluminoformeur, dont la face extérieure 4 est elle-même revêtue d'une couche externe 5 de céramique colonnaire, ayant une épaisseur E3.

La pièce 1 est par exemple un élément d'un redresseur de turbine à haute pression d'un turboréacteur comportant plusieurs aubes fixes, ou une aube mobile de ce type de turbine.

Le rôle de la sous-couche métallique 3 est de protéger la pièce 1 contre l'oxydation et contre la corrosion susceptibles d'être provoquées par les gaz chauds et agressifs circulant dans la turbine. Son rôle est également de permettre l'accrochage de la couche externe 5 de céramique.

La sous-couche est réalisée par dépôt d'aluminiure ou d'un alliage MCr Al Y dans lequel M est de préférence du nickel ou du cobalt, au moyen de procédés thermochimiques de cémentation en caisse ou en phase vapeur. Cette sous-couche peut également comporter du platine. Au moyen de traitements thermiques, du métal, notamment du nickel, diffuse de la pièce 1 vers la sous-couche 3 et de l'aluminium diffuse de la sous-couche 3 vers la pièce 1. La face extérieure 2 de la pièce 1 est à l'interface entre une zone externe 1a de la pièce 1 en alliage NiAl riche en nickel et une zone interne 3a de la sous-couche en alliage NiAl riche en aluminium. La sous-couche 3 présente en outre près de la face extérieure 4 une pellicule d'alumine 3b imperméable à l'oxygène et assurant l'accrochage de la couche externe 5 en céramique.

La couche externe 5 est élaborée par évaporation sous bombardement électronique d'un oxyde à base de zircone stabilisée, partiellement ou complètement par addition d'oxyde d'yttrium.

L'épaisseur E3 de la couche externe 5 est comprise entre 100 et 500 micromètres, typiquement 150 micromètres.

L'épaisseur E2 de la sous-couche 3 est typiquement de 70 micromètres, mais peut varier entre 40 et 100 micromètres.

L'épaisseur E1 de la toile de la pièce 1 peut descendre jusqu'à 0,5 mm, lorsqu'il s'agit d'une aube de turbine à haute pression refroidie par l'intérieur.

La pièce 1 ainsi revêtue de la sous-couche métallique 3 et de la couche externe 5 de céramique peut subir des dégradations en fonctionnement, dues aux chocs thermiques, à l'écaillage de la couche externe 5, à l'oxydation de la sous-couche 3, et à l'érosion par impact de particules.

La figure 2 montre ainsi une zone externe 6 de la pièce 1 qui est écaillée et dans laquelle la sous-couche 3 a subi une oxydation importante. Cette zone 6 peut être par exemple située dans le bord d'attaque d'une aube 7 d'une turbine.

Le but de l'invention est de proposer un procédé pour réparer la zone écaillée 6 et notamment de reconstituer la sous-couche 3 avec la pellicule d'alumine 3b dans cette zone 6.

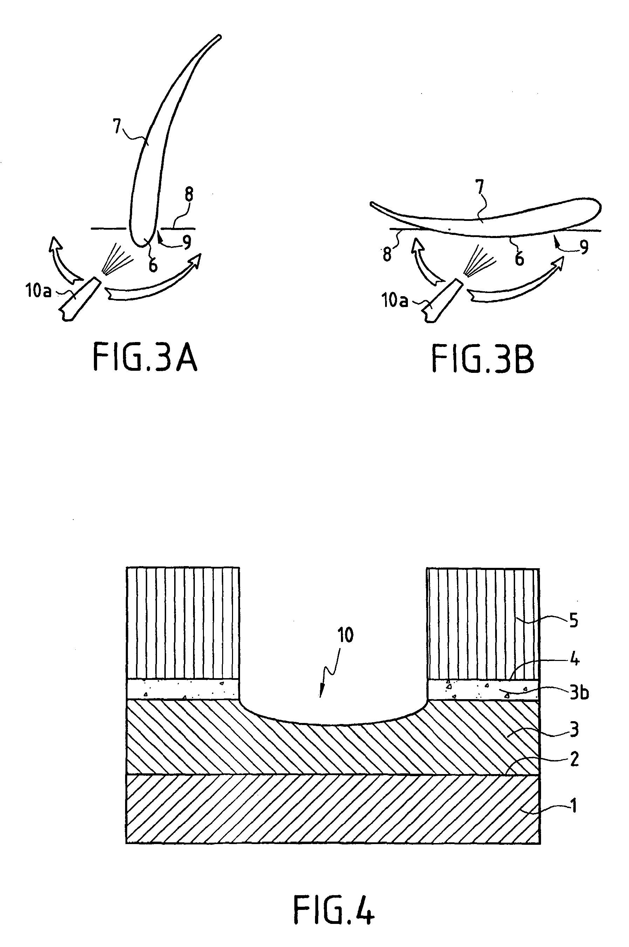

La figure 3a montre une aube 7 dans laquelle la zone 6 se trouve dans le bord d'attaque et la figure 3b montre une aube 7 dans laquelle la zone 6 se trouve dans l'extrados.

Pour réparer la zone 6, on délimite cette zone par un masque 8 qui comporte une fenêtre 9 dans laquelle est exposée la zone écaillée 6.

La taille de la fenêtre 9 est fonction de la surface à traiter, et la configuration géométrique du masque 8 est adaptée à la géométrie de la pièce 1 à traiter. En pratique, on traite toutes les aubes d'une même turbine par le même type de masque, car statistiquement les aubes d'une turbine subissent sensiblement les mêmes dégradations dans les mêmes zones.

Lorsque l'aube 7 est équipée du masque 8, on décape mécaniquement la zone 6, afin d'enlever, au droit de la fenêtre 9, la couche externe 5 de céramique, la pellicule d'alumine 3b et une partie de l'épaisseur de la sous-couche 3, afin d'enlever les oxydes, mais on prend soin de ne pas attaquer le substrat 1.

Ce décapage peut être réalisé par sablage ou jet d'eau à haute pression, avec ou sans abrasif, au moyen d'une buse 10a dirigée vers la fenêtre 9 et que l'on déplace au cours du traitement de manière à décaper la surface de l'aube 7 engagée dans la fenêtre 9. Après le décapage de la zone 6, l'aube 7 présente dans cette zone 6 une cuvette 10 délimitée par la couche externe 5 de céramique restante qui présente des bords plans près de la cuvette, ainsi que cela est montré par la figure 4.

Il s'agit maintenant de redonner à la sous-couche 3 ses qualités de protection contre l'oxydation et la corrosion dans la zone décapée 6.

La couche externe 5 restante étant non conductrice d'électricité et le substrat 1 et la sous-couche 3 étant métalliques et conductrices, le procédé utilise les propriétés isolantes de la céramique pour déposer les métaux qui constitueront de la sous-couche 3 dans la zone décapée 6, notamment le nickel, le chrome, le cobalt, ou du MCr Al Y.

Le dépôt est réalisé par électrophorèse ou par électrolyse. Aucun masque n'est nécessaire pour cette opération, car la céramique restante est électriquement isolante. On apporte une quantité de matière correspondant sensiblement à l'épaisseur décapée de la sous-couche 3.

De préférence, le dépôt est réalisé par électrophorèse car cette opération est rapide et ne dure que quelques secondes et, en outre, elle permet de déposer plusieurs métaux en une seule opération. La couche spongieuse ainsi obtenue est facile à infiltrer avec d'autres métaux, tels que le platine, le palladium, l'aluminium.

Lorsque l'on recharge la sous-couche avec du McrAIY, on utilise un bain électrophorétique comprenant un mélange de 40 % de nitrométhane et 60 % d'alcool isopropylique auquel on ajoute une poudre de McrAIY de 5 à 10 micromètres dans une proportion de 60 g par litre. Pour avoir un dépôt de 20 micromètres, on applique une tension de 400 V pendant cinq secondes, la pièce 1 étant positionnée en cathode.

Le dépôt de métaux précieux, tels que le platine et le palladium, peut être réalisé par électrolyse. Ces métaux s'infiltrent dans la structure spongieuse obtenue par électrophorèse.

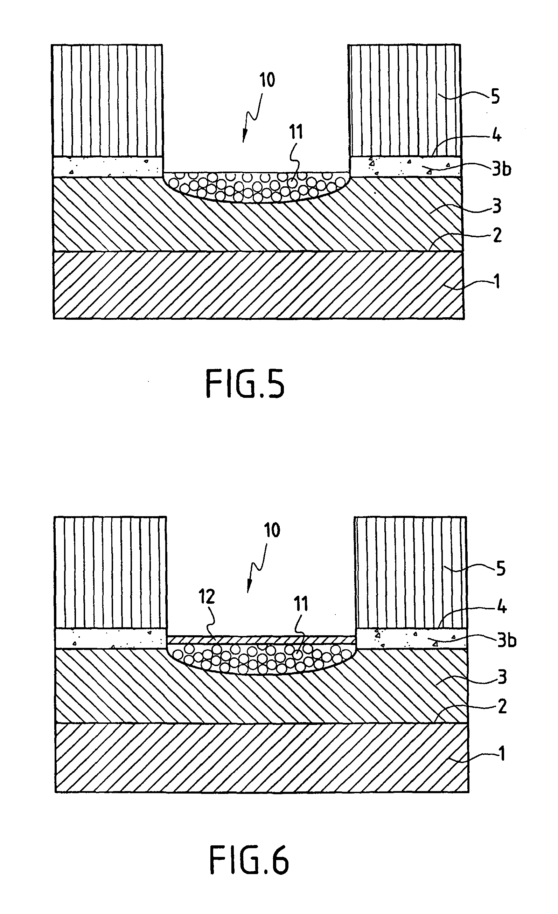

La figure 5 montre l'aspect de la cuvette 10, après l'opération d'électrophorèse. Cette cuvette 10 comporte dans son fond une structure spongieuse 11 de métaux apportés.

La figure 6 montre le fond de la cuvette 10 après l'ajout d'une couche 12 de platine par exemple par électrolyse.

L'opération suivante du procédé est optionnelle et consiste à aluminiser le fond de la cuvette 10. Cette aluminisation ne peut pas être réalisée par les procédés de cémentation en caisse ou en phase vapeur, car ces procédés nécessitent la présence d'un activateur tel le fluorure d'ammonium NH₄F ou le chlorure d'ammonium NH₄Cl dont la décomposition à chaud produirait de l'acide chlorhydrique ou de l'acide fluorhydrique qui décaperait alors la couche externe 5 de céramique restante.

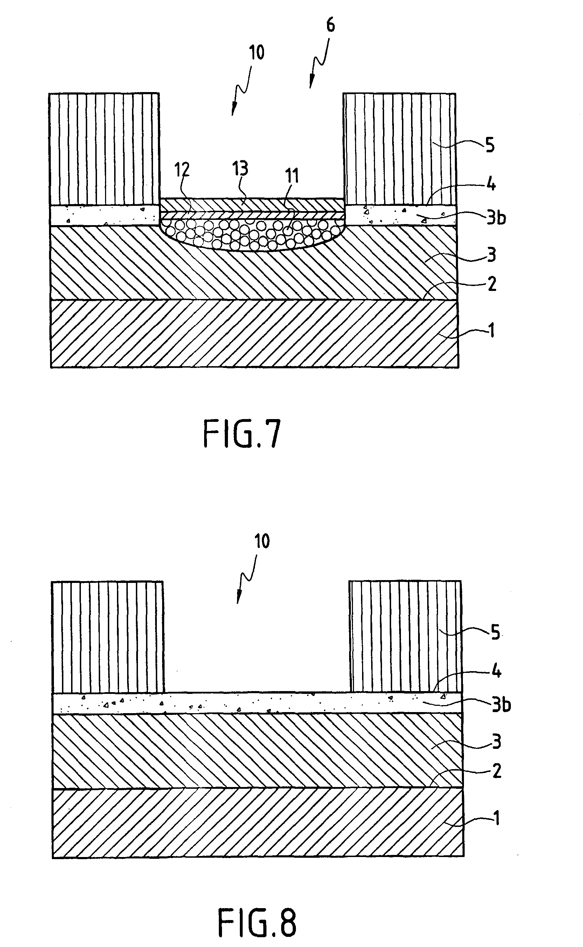

Selon l'invention, ainsi que cela est montré sur la figure 7, on applique dans le fond de la cuvette 10, au-dessus des couches des métaux apportés 11 et 12, une couche 13 de peinture aluminisante qui s'infiltre dans la structure spongieuse 11. Cette application est réalisée au pinceau. Cette peinture comporte de l'aluminium et du silicium en suspension dans de l'eau. La poudre de silicium rend la suspension colloïdale. Ce produit est couramment commercialisé sous le nom de Sermaloy J. Une précuisson doit être effectuée avant l'opération du McrAIY avec le Sermaloy J. La diffusion qui a pour but de former un aluminiure résistant à l'oxydation et à la corrosion se fait à une température de 1000°C pendant trois heures. Cette diffusion entraîne également la reconstitution de la pellicule d'alumine 3b dans le fond de la cuvette, comme cela est montré sur la figure 8.

Les métaux de la couche 12 rapportés par électrolyse pénètrent en réalité dans la structure spongieuse 11 de métaux apportés par électrophorèse et en provoque la consolidation par liaison entre elles des particules électrophorétiques . De même la couche 13 de peinture aluminisante pénètre entre les particules électrophorétiques à la façon d'un liquide absorbé par une éponge.

Le sous-couche rechargée n'est pas nécessairement identique à la sous-couche initiale. On peut en effet très bien avoir une sous-couche initiale en NiAl et un chargement en MCr Al Y ou réciproquement.

A partir de ce stade, la sous-couche 3 est entièrement restaurée et la pièce 1 peut être réutilisée sans autre traitement.

De préférence, on reconstitue la couche externe 5 de céramique dans la partie restante de la cuvette 10.

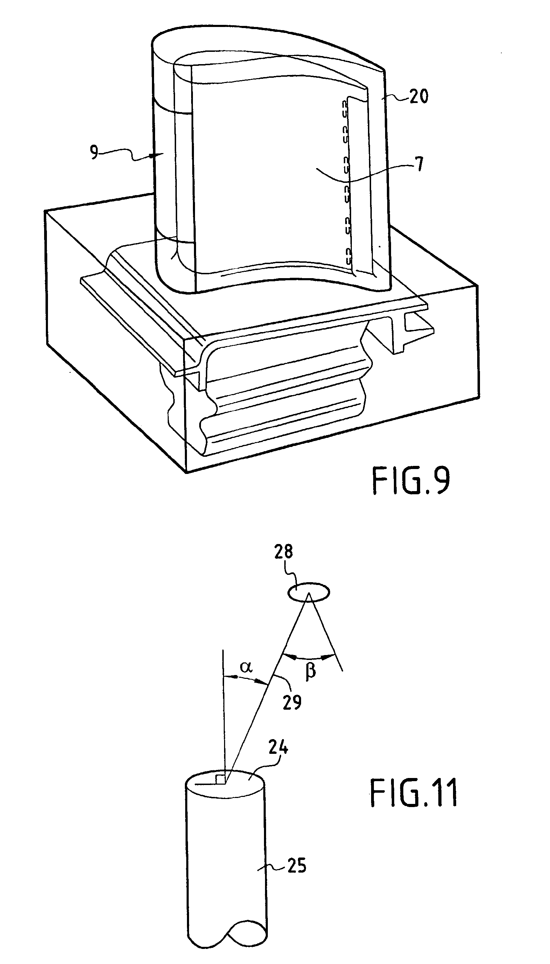

Pour ce faire, comme cela est montré sur la figure 9, on rééquipe de nouveau la pièce 1 ou l'aube 7 avec un masque 20 comportant une fenêtre 9 encadrant l'orifice de la cuvette 10. Le masque 20 protège l'ensemble de la couche externe 5 de céramique située à l'extérieur de la cuvette 10. Le dépôt de céramique dans la cuvette 10 est réalisé par le procédé d'évaporation sous bombardement électronique, communément appelé procédé EB-PVD.

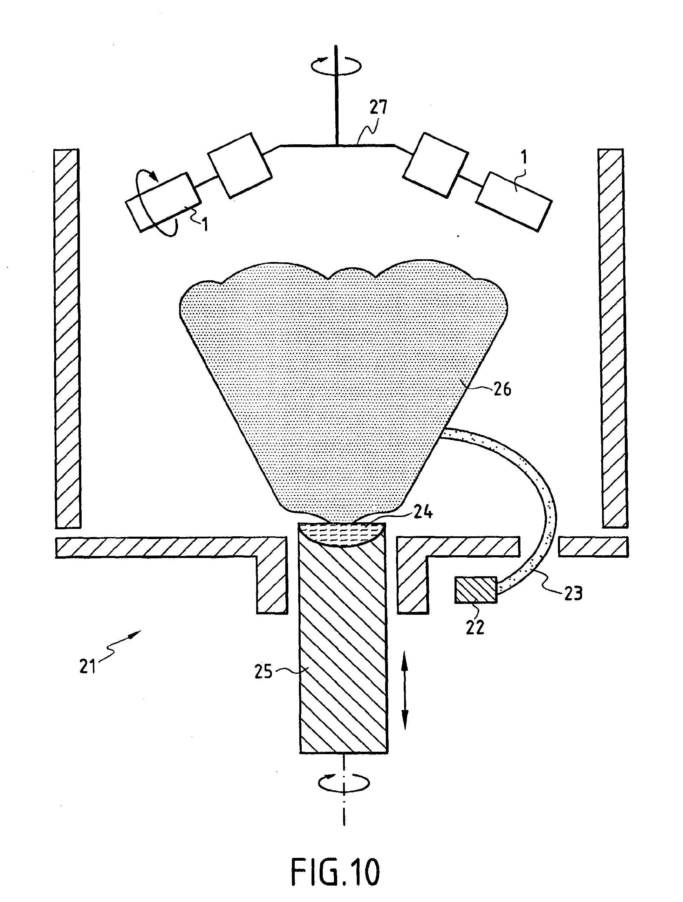

La figure 10 montre schématiquement un appareil 21 de production de vapeur de céramique disposé dans une chambre sous vide qui comporte au moins un canon à électrons 22 émettant un faisceau 23 d'électrons déviés par un champ magnétique vers la face d'extrémité 24 d'une barre 25 de matrice céramique, zircone et yttrium. Sous l'effet du bombardement, un nuage 26 de vapeurs de matières céramiques est émis dans la chambre. Un dispositif 27 supporte des pièces 1 équipées des masques 20 au-dessus de la source de vapeurs de matière.

La vitesse 1 de dépôt de céramique sur une zone 28 de la surface exposée à la matière céramique est fonction de l'angle α de la normale de la face d'extrémité 24 avec le trajet 29 de la matière entre la face 24 et la zone 28, est également fonction de l'angle β du trajet 29 avec la normale de la surface 28, et est inversement proportionnel au carré de la longueur d du trajet 29. Cette vitesse V est en fait égale à K.cosα.cosβ/d², K étant une constante fonction de l'énergie du bombardement électronique et de la surface d'évaporation.

Ainsi, seules les surfaces des pièces 1 exposées dans les trajets des vapeurs de céramique sont soumises à un dépôt de matière céramique. En réalité, la vapeur diffuse un peu partout autour des pièces, mais la vitesse de dépôt est beaucoup plus faible et difficilement contrôlable car elle dépend de l'environnement des pièces.

Du fait que l'opération de dépôt de céramique est relativement longue, on introduit une pluralité de pièces 1 dans l'appareil 21. Pour faire en sorte que le dépôt soit réalisé de manière sensiblement uniforme dans les cuvettes 10 des pièces, on expose uniquement les cuvettes référencées 10 sur les figures 4 à 8, vers la face d'extrémité 24 de la barre de matière 25. Le dispositif 27 supportant les pièces 1 comporte des moyens pour faire osciller les pièces au cours du traitement de dépôt afin que toutes les portions de surface des cuvettes 10 de toutes les pièces 1 contenues dans l'appareil 21 reçoivent une couche externe 5 de céramique sensiblement homogène. On définit dans le four un volume dit « utile» dans lequel on peut disposer les pièces et contrôler l'épaisseur du revêtement à plus ou moins 15% près. Le dispositif 27 permet de maintenir les pièces traitées dans ce volume utile.

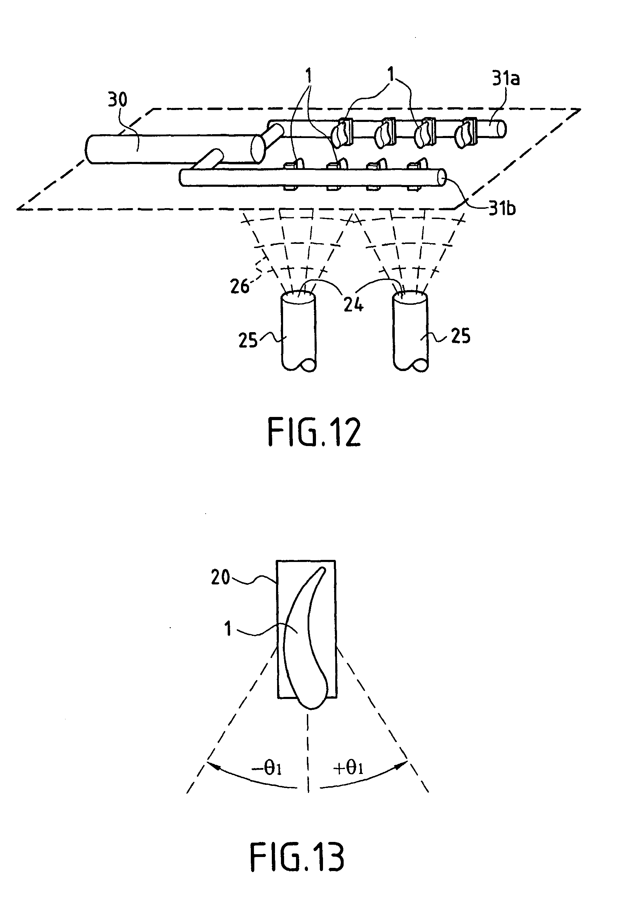

Le dispositif 27, montré sur la figure 12, comporte par exemple un bras 30 terminé par une fourche ayant deux branches parallèles 31a et 31b sur lesquelles les pièces 1, qui sont par exemple des aubes ou des redresseurs de turbine, sont montées de manière à pouvoir pivoter autour d'une position d'équilibre d'un angle de ±θ₁ ainsi que cela est montré sur la figure 13. Les nuages 26 de vapeurs sont émises par deux barres 25 de matrice céramique écartées selon l'axe du bras 30. Les pales des aubes 1, montrées sans les masques 20 sur la figure 12, par souci de clarté, sont disposées verticalement, c'est-à-dire que les bords d'attaque des pales sont disposées en regard des barres 25 et les bords de fuite sont dirigés vers le haut. La présence de deux sources de vapeur céramiques 25 permet d'avoir un champ de vapeur 26 plus uniforme dans la zone des pales.

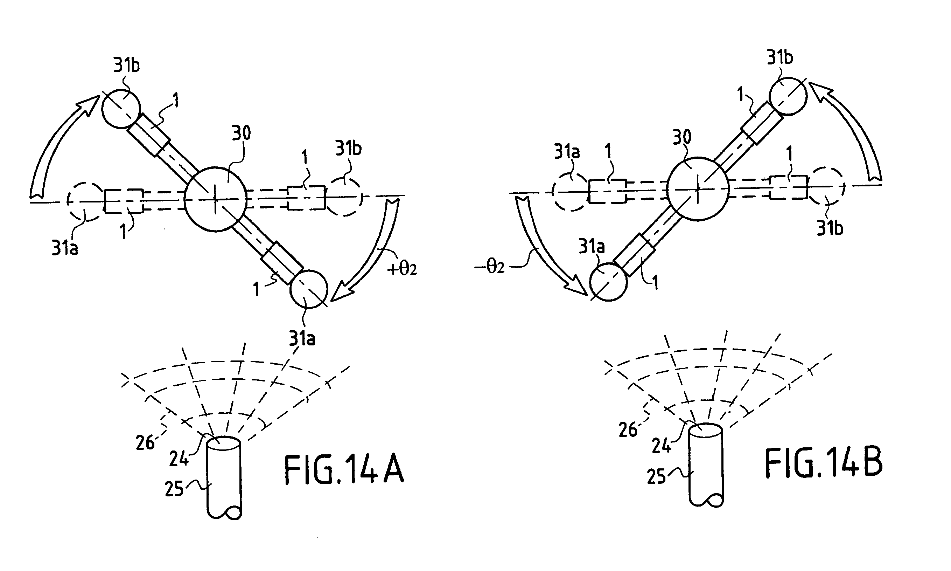

Le bras 30 peut lui-même être soumis à un mouvement d'oscillation d'un angle de ±θ₂ autour de son axe, ainsi que cela est montré sur les figures 14a et 14b.

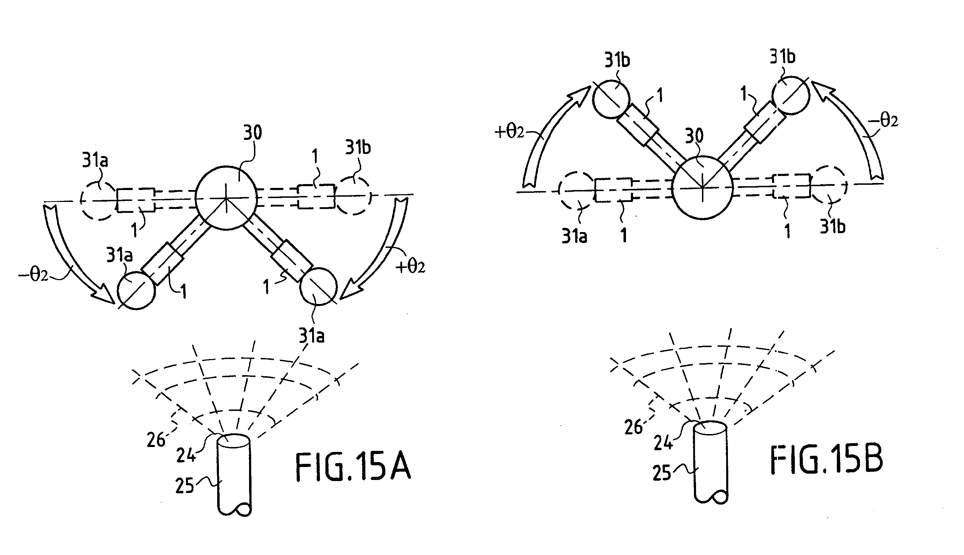

Selon une variante de réalisation montrée sur les figures 15a et 15b, les branches 31a et 31b sont reliées au bras 30 par des bras de liaison 32a et 32b pouvant osciller symétriquement par rapport à un plan vertical contenant le bras 30, d'un angle de ±0₂.

Les amplitudes θ₁ et θ₂ des oscillations des pièces 1 et des bras 31a, 31b sont fonction de la configuration des cuvettes 10 à charger avec de la céramique.

Dans le cas où la zone à revêtir est le bord d'attaque d'une aube de turbine, la durée de l'exposition des pièces 1 aux vapeurs de céramique est nettement inférieure à la durée d'exposition d'une aube neuve à revêtir sur toute sa surface.

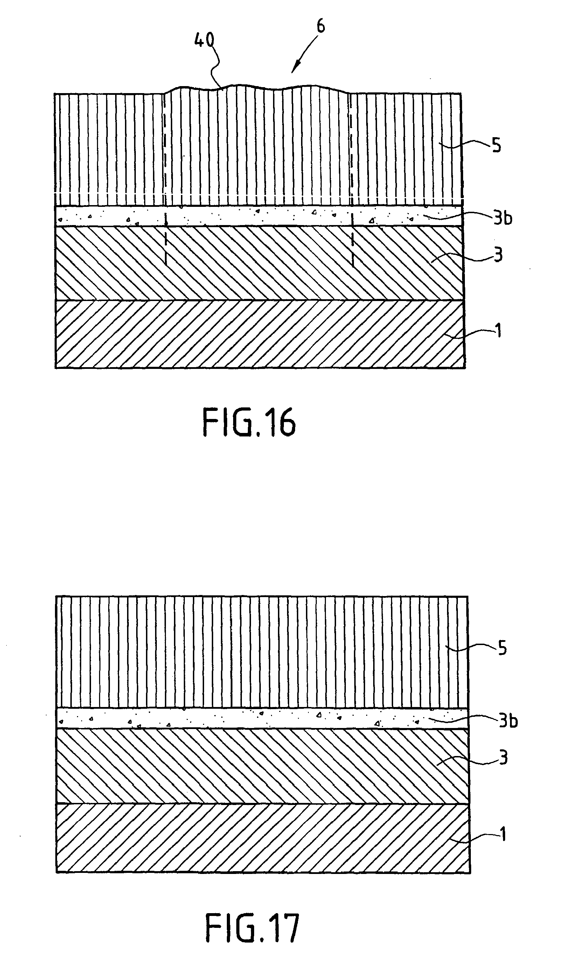

La charge de céramique 40 posée dans la cuvette 10 a une structure colonnaire identique à celle de la couche restante 5 de céramique. La durée d'exposition des pièces 1 est telle que la structure colonnaire de la cuvette 10 dépasse légèrement la couche externe restante 5 de céramique, ainsi que cela est montré sur la figure 16.

Il ne reste plus qu'à écrêter les colonnes de céramique de la cuvette 10 par polissage avec un papier abrasif pour redonner le profil initial de la pièce 1 au nouveau revêtement, comme cela est montré sur la figure 17.

## Revendications

1. Procédé de réparation locale de pièces revêtues d'une barrière thermique constituée d'une couche externe (5) de céramique et d'une sous-couche (3) métallique en alliage aluminoformeur assurant la protection du substrat (1) contre l'oxydation et l'accrochage de la couche externe (5) de céramique, **caractérisé par** les étapes suivantes :
a) on délimite la zone à réparer (6) avec un masque (8) mécanique adapté à la forme de la pièce (1) et à la zone à réparer (6),
b) on décape la zone à réparer (6), on enlève dans cette zone la céramique, la couche d'alumine (3b) et une partie de l'épaisseur de la sous-couche (3),
c) on rapporte des matériaux de réparation de la sous-couche (3) dans ladite zone (6) en soumettant la pièce partiellement décapée à un dépôt de métaux par courant électrique, et
d) on soumet la pièce à un traitement thermique de diffusion des métaux apportés dans la sous-couche restante de la zone à réparer (6) et la formation d'une pellicule (3b) superficielle d'alumine.

2. Procédé selon la revendication 1, **caractérisé par le fait que** l'on décape la zone à réparer (6) mécaniquement par sablage, ponçage, meulage ou par décapage laser.

3. Procédé selon l'une des revendications 1 ou 2, **caractérisé par le fait que** l'on rapporte des matériaux de répartition de la sous-couche (3) dans la zone à réparer (6) par électrophorèse.

4. Procédé selon l'une des revendications 1 à 3, **caractérisé par le fait que** l'on dépose en outre du platine ou du palladium par électrolyse.

5. Procédé selon l'une des revendications 1 à 4, **caractérisé par le fait que** l'on applique sur les métaux apportés une couche (13) de peinture aluminisante.

6. Procédé selon l'une quelconque des revendications 1 à 5, **caractérisé par le fait que**, après avoir soumis la pièce à un traitement thermique, on délimite de nouveau la zone à réparer avec un masque (20) mécanique et on dépose une nouvelle couche externe de céramique sur la zone à réparer.

7. Procédé selon la revendication 6, **caractérisé par le fait que** l'on dépose la nouvelle couche externe de céramique par un procédé d'évaporation de céramique par bombardement électronique.

8. Procédé selon la revendication 7, **caractérisé par le fait que** l'on expose la surface de la zone à réparer à la source d'émission de vapeurs de céramique.

9. Procédé selon la revendication 8, **caractérisé par le fait que** l'on fait pivoter la pièce (1) suivant un mouvement oscillant d'amplitude donnée (2θ₁) au cours de l'exposition afin de déposer une couche sensiblement homogène de céramique sur la zone à réparer.

## Claims

1. Method for the local repair of parts coated with a thermal barrier consisting of an outer ceramic layer (5) and a metallic sublayer (3) made of an alumina-forming alloy providing protection of the substrate (1) against oxidation and providing attachment of the outer ceramic layer (5), **characterized by** the following steps:
a) the zone to be repaired (6) is delimited with a mechanical mask (8) adapted to the form of the part (1) and to the zone to be repaired (6);
b) the zone to be repaired (6) is scoured, the ceramic, the alumina layer (3b) and part of the thickness of the sublayer (3) are removed from this zone;
c) the repair materials for the sublayer (3) are added to said zone (6) by subjecting the partially scoured zone to deposition of metals by an electric current; and
d) the part is subjected to a heat treatment for diffusing the added metals into the remaining sublayer of the zone to be repaired (6) and for forming a superficial alumina film (3b).

2. Method according to Claim 1 **characterized in that** the zone to be repaired (6) is scoured mechanically by sandblasting, sanding or grinding or by laser scouring.

3. Method according to one of Claims 1 and 2, **characterized in that** the repair materials for the sublayer (3) are added to the zone to be repaired (6) by electrophoresis.

4. Method according to one of Claims 1 to 3, **characterized in that** platinum or palladium is also deposited by electrolysis.

5. Method according to one of Claims 1 to 4, **characterized in that** a layer (13) of aluminizing paint is applied onto the added metals.

6. Method according to any one of Claims 1 to 5, **characterized in that**, after having subjected the part to a heat treatment, the zone to be repaired is once again delimited with a mechanical mask (20) and a new outer ceramic layer is deposited on the zone to be repaired.

7. Method according to Claim 6, **characterized in that** the new outer ceramic layer is deposited by a method of evaporating a ceramic by electron bombardment.

8. Method according to Claim 7, **characterized in that** the surface of the zone to be repaired is exposed to the ceramic vapour emission source.

9. Method according to Claim 8, **characterized in that** the part (1) is pivoted in an oscillating movement with a given amplitude (2θ₁) during exposure in order to deposit a substantially homogeneous ceramic layer onto the zone to be repaired.

## Patentansprüche

1. Verfahren zum lokal begrenzten Reparieren von Werkstücken, die mit einer Wärmeschutzschicht beschichtet sind, die von einer Keramik-Außenschicht (5) und einer metallenen Unterschicht (3) aus einer Aluminium-Legierung gebildet wird, welche den Schutz des Trägersubstrats (1) gegen Oxidation und den Halt der Keramik-Außenschicht (5) gewährleistet,
**gekennzeichnet durch** die folgenden Verfahrensschritte:
a) der zu reparierende Bereich (6) wird mit einer mechanischen Maske (8) eingegrenzt, welche an die Form des Werkstücks (1) und an den zu reparierenden Bereich (6) angepasst ist,
b) der zu reparierende Bereich (6) wird blankgebeizt, in diesem Bereich wird die Keramik, die Aluminiumoxidschicht (3b) und ein Teil der Dicke der Unterschicht (3) entfernt,
c) in diesem Bereich (6) werden Reparaturwerkstoffe für die Unterschicht (3) aufgetragen, indem das teilweise blankgebeizte Werkstück einem Auftragen von Metallen **durch** elektrischen Strom unterzogen wird, und
d) das Werkstück wird einer Thermobehandlung mit Diffusion der in der verbliebenen Unterschicht des zu reparierenden Bereichs (6) aufgetragenen Metalle und der Bildung eines Überzugs (3b) mit Aluminium an der Oberfläche unterzogen.

2. Verfahren nach Anspruch 1,
**dadurch gekennzeichnet,**
**dass** der zu reparierende Bereich (6) mechanisch durch Sandstrahlen, Polieren, Schleifen oder durch Laser-Beizen blankgebeizt wird.

3. Verfahren nach einem der Ansprüche 1 oder 2,
**dadurch gekennzeichnet,**
**dass** Verteilwerkstoffe für die Unterschicht (3) in dem zu reparierenden Bereich (6) durch Elektrophorese aufgetragen werden.

4. Verfahren nach einem der Ansprüche 1 bis 3,
**dadurch gekennzeichnet,**
**dass** ferner Platin oder Palladium durch Elektrolyse aufgetragen wird.

5. Verfahren nach einem der Ansprüche 1 bis 4,
**dadurch gekennzeichnet,**
**dass** auf die aufgetragenen Metalle eine Schicht (13) aluminisierender Farbe aufgetragen wird.

6. Verfahren nach einem der Ansprüche 1 bis 5,
**dadurch gekennzeichnet,**
**dass** , nachdem das Werkstück einer Wärmebehandlung unterzogen wurde, der zu reparierende Bereich (6) erneut mit einer mechanischen Maske (20) eingegrenzt wird und eine neue äußere Keramikschicht auf den zu reparierenden Bereich aufgetragen wird.

7. Verfahren nach Anspruch 6,
**dadurch gekennzeichnet,**
**dass** die neue äußere Keramikschicht durch ein Verfahren zum Aufdampfen von Keramik durch Elektronenbeschuss aufgetragen wird.

8. Verfahren nach Anspruch 7,
**dadurch gekennzeichnet,**
**dass** die Oberfläche des zu reparierenden Bereichs der Keramikdämpfe abgebenden Quelle ausgesetzt wird.

9. Verfahren nach Anspruch 8,
**dadurch gekennzeichnet,**
**dass** das Werkstück (1) während dieses Aussetzens in einer Oszillationsbewegung mit gegebener Amplitude (2θ₁) gedreht wird, um eine im Wesentlichen homogene Keramikschicht auf den zu reparierenden Bereich aufzutragen.
